# EUROPEAN PATENT APPLICATION

(11) **EP 1 921 787 A2**
(43) Date of publication of application: **14.05.2008**
(21) Application number: 07018846.1
(22) Date of filing: 25.09.2007
(51) Int. Cl.: H04L 1/00

(54) **Wireless network that adapts concurrent interfering transmission parameters based on channel conditions**

(30) Priority: 18.12.2006 US 641198; 09.11.2006 US 595346
(71) Applicant: Broadcom Corporation, Irvine, CA 92617 (US)
(72) Inventor: Bennett, James c/o Broadcom Corporation, San Clemente 92617 CA (US)
(74) Representative: Jehle, Volker Armin

(57) **Abstract**

A wireless network infrastructure that adapts frame parameters of concurrent interfering receptions in response to the dynamically varying channel conditions. The channel conditions are determined by number of associated wireless end point devices within a cell, their capabilities, anticipated bandwidth usage, QOS (Quality Of Service) demands, priority of service and idle states, cell- overlap interferences, near-far interferences and noises. The wireless network infrastructure contains a wireless access point within the cell that assigns a mode to a frame or sub-frame and adapts to channel conditions by varying mode durations and payload lengths. The modes include single transmission mode, plurality of partial concurrent interfering transmission modes and full concurrent interfering transmission mode. These modes allow single as well as concurrent interfering transmissions and receptions of varying payload lengths.

## Description

### SPECIFICATION

The present application is a continuation-in-part of Utility Application Serial No. 11/595,346 filed on November 9, 2006, and entitled "ADAPTIVE NETWORK SUPPORTING SINGLE TO CONCURRENT INTERFERING WIRELESS TRANSMISSIONS," (BP5761), which is incorporated herein in its entirety by reference for all purposes.

The present application is related to the following co-pending applications:
1. Utility Application Serial No. 11/xxx,xxx filed on December xx, 2006, and entitled "CELL PROTOCOL ADAPTING BETWEEN SINGLE AND CONCURRENT INTERFERING TRANSMISSIONS AND RECEPTIONS BASED ON CHANNEL CONDITIONS," (BP5788);
2. Utility Application Serial No. 11/xxx,xxx filed on December xx, 2006, and entitled "CELL SUPPORTING SIMULTANEOUS AND DIFFERING CONCURRENT INTERFERING TRANSMISSION PARAMETERS AND TECHNIQUES," (BP5930); and
3. Utility Application Serial No. 11/xxx,xxx filed on December xx, 2006, and entitled "WIRELESS NETWORK THAT UTILIZES CONCURRENT INTERFERING TRANSMISSION AND MIMO TECHNIQUES," (BP5931), both of which are incorporated by reference in their entirety for all purposes.

### BACKGROUND

### 1. Technical Field

The present invention relates generally to wireless communication; and, more particularly, to wireless access points in a packet switched network.

### 2. Related Art

Today wireless access points are in widespread use because of their ability-to provide mobile computing devices wireless access to backbone networks in both public and private places, within a wireless local area network. The wireless local area network contains wireless access points that provide wireless routing services to a plurality of mobile end point wireless devices. One of the prominent backbone networks is Internet, another being Intranet. Thus, today wireless access points provide wireless access to the Internet in may public places such as restaurants, air ports, public buildings and homes.

Examples of end point wireless devices include personal or laptop computers, servers, set top boxes and handheld data/communication devices. Often a plurality of wireless access points is bridged to provide additional coverage area. The communication between wireless access points and the end point wireless devices occur on the basis of predefined sets of rules or protocols.

A plurality of factors that make up channel conditions include number of associated wireless end point devices within a cell, bandwidth usage, QOS (Quality Of Service), priority of service, interferences and noises. These channel conditions vary dynamically over a period of time, in public environments such as restaurants and airports, causing inconveniences to the users. The inconvenience essentially shows up in terms of delays and broken connections.

These and other limitations and deficiencies associated with the related art may be more fully appreciated by those skilled in the art after comparing such related art with various aspects of the present invention as set forth herein with reference to the figures.

### BRIEF SUMMARY OF THE INVENTION

The present invention is directed to apparatus and methods of-operation that are further described in the following Brief Description of the Drawings, the Detailed Description of the Invention, and the claims.

According to an aspect of the invention, an access point circuitry that supports a plurality of end point devices is provided, the access point circuitry comprising:
receiver circuitry that receives a concurrent interfering transmission from the plurality of end point devices, in a current frame;
processing circuitry, communicatively coupled to the receiver circuitry, that detects the concurrent interfering transmission;
transmitter circuitry communicatively coupled to the processing circuitry;
the processing circuitry, based on a change in a channel condition, generates an instruction to change at least one frame parameter for the a next frame;
the processing circuitry delivers the instruction to adapt to the change in the at least one frame parameter during the next frame, to at least one of the plurality of end point devices via the transmitter circuitry; and
the processing circuitry detects received concurrent interfering transmission from the plurality of end point devices, in the next frame.

Advantageously, the processing circuitry delivers the instruction to adapt to the change in the at least one frame parameter during the next frame at the beginning of the next frame.

Advantageously, the next frame comprising one or more sub-frames.

Advantageously, the change in the at least one frame parameter is applicable to one of the sub-frames.

Advantageously, the frame parameter comprising duration of the one of the sub-frames.

Advantageously, the frame parameter comprising payload length.

Advantageously, the frame parameter comprising a concurrent interfering transmission mode.

Advantageously, the concurrent interfering transmission mode comprising a mode that allows only one of the plurality of end point devices to transmit during the one of the sub-frames.

Advantageously, the concurrent interfering transmission mode comprising a mode that allows selected few of the plurality of end point devices to transmit during the one of the sub-frames.

Advantageously, the concurrent interfering transmission mode comprising a mode that allows any of the plurality of end point devices to transmit during the one of the sub-frames.

According to an aspect of the invention, an end point device circuitry is provided that supports concurrent interfering receptions, the end point device circuitry comprising:
receiver circuitry that-receives a concurrent interfering transmission;
processing circuitry, communicatively coupled to the receiver circuitry, that detects the concurrent interfering transmission;
the processing circuitry receives an instruction to adapt at least one frame parameter for a next frame;
the processing circuitry responds to the instruction by adapting at least one frame parameter for the next frame; and
the processing circuitry detects data from the received concurrent interfering transmission during the next frame.

Advantageously, the frame parameter comprising duration of the next frame.

Advantageously, the frame parameter comprising a concurrent interfering transmission mode.

According to an aspect of the invention, a method performed by an access point that communicates a plurality of packets with a plurality of end point devices, in a wireless network infrastructure is provided, the method comprising:
initializing;
establishing communication with each of the plurality of end point devices;
identifying capabilities of each of the plurality of end point devices;
determining channel conditions; and
adapting at least one frame parameter for a next frame.

Advantageously, the access point informs adaptation of at least one frame parameter for a next frame during a beacon period.

Advantageously, the channel condition comprising load on the access point.

Advantageously, the load is determined by number of the plurality of end point devices that participate in the communication.

Advantageously, the load is determined by the quality of service demands from the plurality of end point devices associated with the access point.

Advantageously, the load is determined by the noise associated with the access point.

Advantageously, the load is determined by the interference associated with the plurality of end point devices.

Other features and advantages of the present invention will become apparent from the following detailed description of the invention made with reference to the accompanying drawings.

### BRIEF DESCRIPTION OF THE DRAWINGS

FIG. 1 is a flow diagram illustrating functionality of a wireless access point that adapts frame parameters of concurrent interfering transmissions and receptions, applicable to a frame, based on varying channel conditions, in accordance with the present invention;
FIG. 2 is a flow diagram illustrating functionality of a wireless access point that adapts frame parameters of concurrent interfering transmissions and receptions, applicable to a portion of a frame, based on varying channel conditions, in accordance with the present invention;
FIG. 3 is a schematic block diagram of a wireless network infrastructure that supports the adaptations of FIGs. 1 and 2, illustrating a wireless access point, single transmission capable device and concurrent interfering transmission capable device;
FIG. 4 is a schematic block diagram of a wireless access point built in accordance with the embodiment of FIG. 3;
FIG. 5 is a schematic block diagram of a wireless end point device built in accordance with the embodiment of FIG. 3;
FIG. 6 is an exemplary timing diagram illustrating single, partial concurrent interfering and full concurrent interfering transmission modes, during contention free and contention periods, in the embodiment of FIG. 1;
FIG. 7 is a timing diagram illustrating receptions during a contention free period of a partial concurrent interfering transmission mode of FIG. 6;
FIG. 8 is a timing diagram illustrating receptions during a contention period of a partial concurrent interfering transmission mode of FIG. 6; and
FIG. 9 is an exemplary timing diagram illustrating single, partial concurrent interfering and full concurrent interfering transmission modes, using a sub-frame approach, in the embodiment of FIG. 2.

### DETAILED DESCRIPTION OF THE DRAWINGS

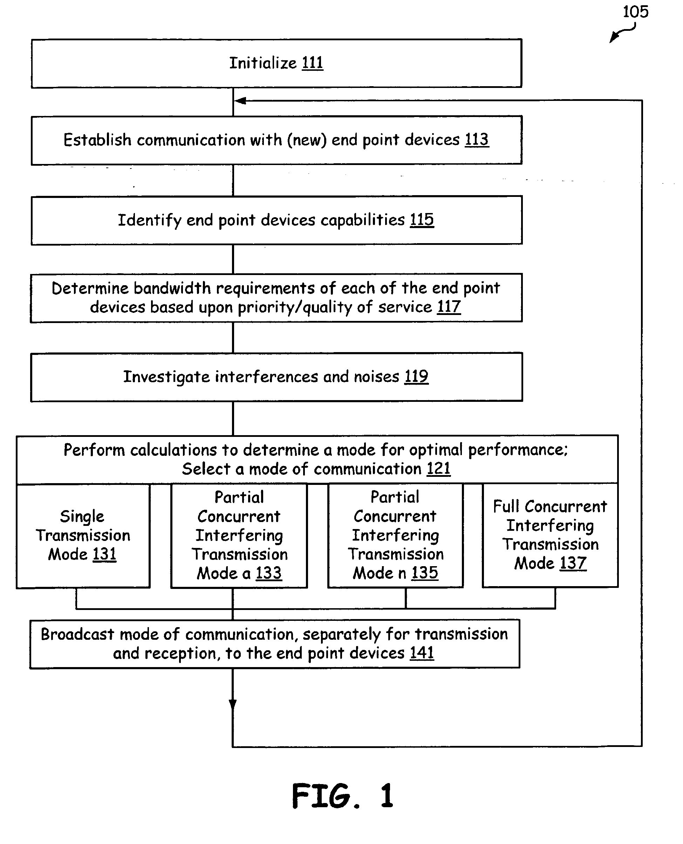

FIG. 1 is a flow diagram illustrating functionality 105 of a wireless access point that adapts frame parameters of concurrent interfering transmissions and receptions, applicable to a frame, based on varying channel conditions, in accordance with the present invention. The frame parameters (also referred here after as coding aggressiveness), in a wireless infrastructure, enforces a major aspect of concurrent interfering transmissions and receptions, the aspect being the ability a receiver to resolve two or more concurrent transmissions. Another aspect that is enforced by varying frame parameters is that of varying payload length. Such receivers are part of the wireless access point, may in some capacity be also a part of wireless end point devices.

The wireless access point optimizes its performance in response to a dynamically varying channel conditions that include load based on bandwidth requirements, noises and interferences by varying aggressiveness of coding that enables the wireless access point to resolve only one transmission, two transmissions or a number of transmissions. In other words, the wireless access point adapts the coding aggressiveness by considering the channel conditions and wireless end point device capabilities, and by selecting one of the many possible transmission or reception modes. This adaptation also includes varying payload length. These modes include single transmission mode, a plurality of partial concurrent interfering transmission modes (say, partial concurrent interfering transmission modes a through n) and full concurrent interfering transmission mode. The wireless access point broadcasts mode selection that is applicable to a next frame, within the wireless network infrastructure, during a beacon period and the wireless end point devices plan their communication in the frame accordingly.

In a legacy single transmission mode, the wireless access point considers only one transmission at a time, and all other transmissions are considered as interferences. During a single transmission mode, the coding aggressiveness is minimal, therefore the overhead associated with coding is also minimal. This mode is suitable, for example, when all of the associated wireless end point devices are only single transmission capable or when the loading on the wireless access point is minimal. Any such mode that is applicable for a frame is informed to the wireless end point devices during a beacon period that precedes the payload portion of the frame. The frame may include contention free period and contention period. During contention free period, the wireless end point devices wait for a brief Short Inter Frame Space (SIFS) and then begin to transmit. Similarly, the wireless access point may also transmit data to any one of the wireless end point devices during contention free period after a SIFS interval. During a contention period, the wireless end point devices or the wireless access point place(s) a Request To Send (RTS) signal and after obtaining Clear To Send (CTS) signal from recipient, begin transmitting data. After completion of transmission of data, the wireless end point devices or the wireless access point receive an acknowledgement (ACK) signal to confirm that the data is received by the recipient. Any contention from a plurality of devices is resolved on the basis of arbitration, as per protocol.

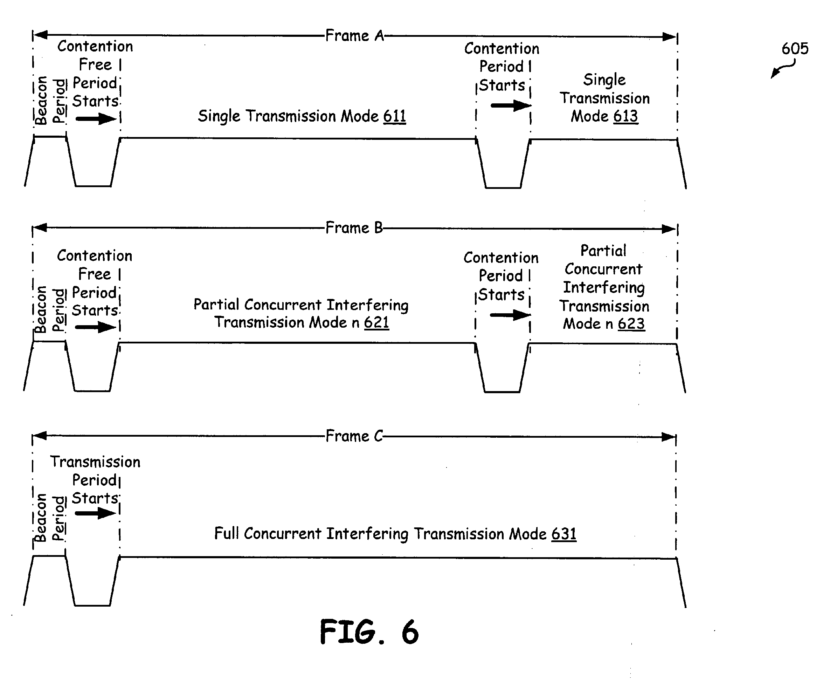

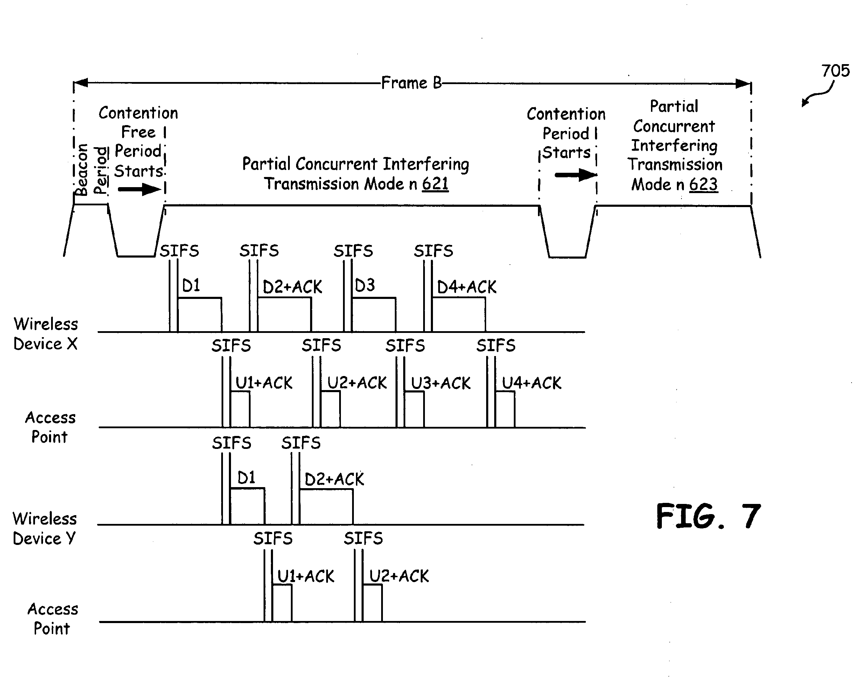

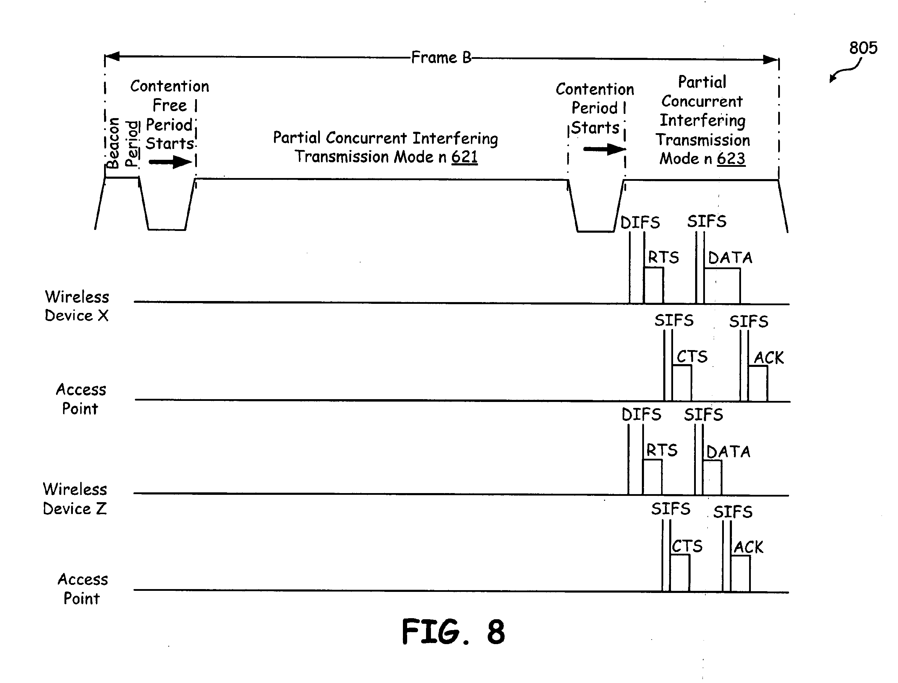

The wireless access point determines suitability of a partial concurrent interfering transmission mode, among partial concurrent interfering transmission modes a through n, for a next frame, based upon number of associated devices and their capabilities, channel conditions and overhead associated with partial concurrent interfering transmission coding. Any determination of such partial concurrent interfering transmission mode provides optimal performance under given circumstances. Timing diagram that is applicable to one of plurality of partial concurrent transmission modes is described with reference to the FIG. 6. Example timing diagrams of data transmissions during a contention free period and contention period, in a partial concurrent interfering transmission mode, are illustrated in FIGs. 7 and 8.

For example, the wireless access point may be installed in an airport and may serve a plurality of floating wireless end point devices. The floating wireless end point devices may be notebook computers or handheld computing devices of passengers who utilize the wireless access point services for a brief interval when they are waiting for their flights. Since the timing of flight arrival and departure occur at various times during a day and the number of passengers who utilize the wireless access point services is unpredictable, the load on the wireless access point is not uniform throughout the day. The wireless access point in such situations periodically assesses the channel conditions and determines number of wireless end point devices that are utilizing the services and their capabilities, and further assesses interference and noise within the airport environment. By considering all these factors, then the wireless access point selects a suitable partial concurrent interfering transmission mode and informs the plurality of notebook computers or handheld computing devices regarding the transmission mode during a next frame.

In a contention free period, a partial concurrent interfering transmission mode, say mode a, may involve allowing a selected number of notebook computers or handheld computing devices to transmit or receive. The wireless access point resolves any such signals received from the selected number of notebook computers or handheld computing devices. For example, one of the plurality of notebook computers or handheld computing devices may determine that this is a contention free period, identify number of devices utilizing the services of the wireless access point and depending on SIFS may begin to transmit data. During a contention period, the notebook computers or handheld computing devices may have to place RTS and depending on the CTS from the wireless access point may begin to transmit data. After completion of transmission of data, the notebook computers or handheld computing devices receive ACK signal from the wireless access point. In addition, a full concurrent interfering transmission mode may not impose any restrictions on the wireless end point devices at all, allowing any number of wireless end point devices to transmit.

Referring to the flow diagram, the functionality of the wireless access point begins at a block 111, when the access point initializes by making initial assessment of cell. The initial assessment includes identifying the number of wireless end point devices that are attempting to access a backbone network that the wireless access point is connected to. In addition, the wireless access point queries each of the plurality of wireless end point devices regarding capabilities, demands of quality of service, anticipated bandwidth usage and idle states. As a part of initial assessment the wireless access point also searches for any noises and interferences that may occur within the cell. The capabilities of the plurality of wireless end point devices may include single transmissions and receptions capabilities, concurrent interfering transmissions and receptions capabilities or both. In addition, the wireless access point also verifies if the wireless end point devices have multiple radio band transmissions and receptions capabilities.

At a next block 113, the wireless access point establishes communication with wireless end point devices during a beacon period. In a periodic assessment, the access point may attempt to establish communication with new wireless end point devices that entered the cell recently. At a next block 115, the wireless access point identifies device capabilities of the newly entered wireless end point devices. The capabilities may include single transmissions and receptions capabilities or concurrent interfering transmissions and receptions capabilities. At a next block 117, the wireless access point assesses bandwidth requirements of each of the wireless end point devices based upon priority and quality of service. This may involve querying each of the plurality of wireless end point devices regarding demands of quality of service, anticipated bandwidth usage and idle states. At a next block 119, the wireless access point investigates interferences and noises within the cell.

At a next block 121, the wireless access point performs calculations to determine a mode that provides for an optimal performance and selects that mode of communication. In conjunction with of periodic assessment, the wireless access point may also use triggers to select one of the communication modes. The trigger may be a new noise or interference, or sudden entry of many new wireless end point devices. The modes are illustrated as event blocks such as single transmission mode 131, partial concurrent interfering transmission mode a 133, partial concurrent interfering mode n 135 and full concurrent interfering transmission mode 137. The partial concurrent interfering transmission modes a and n illustrated may in practice be many more that range from a through n. Once a mode is selected, the wireless access point informs this to wireless end point devices by broadcasting it, at a next block 141. The considerations for transmission and receptions, from the point of view of wireless access point, may be different and are also informed to the wireless end point devices.

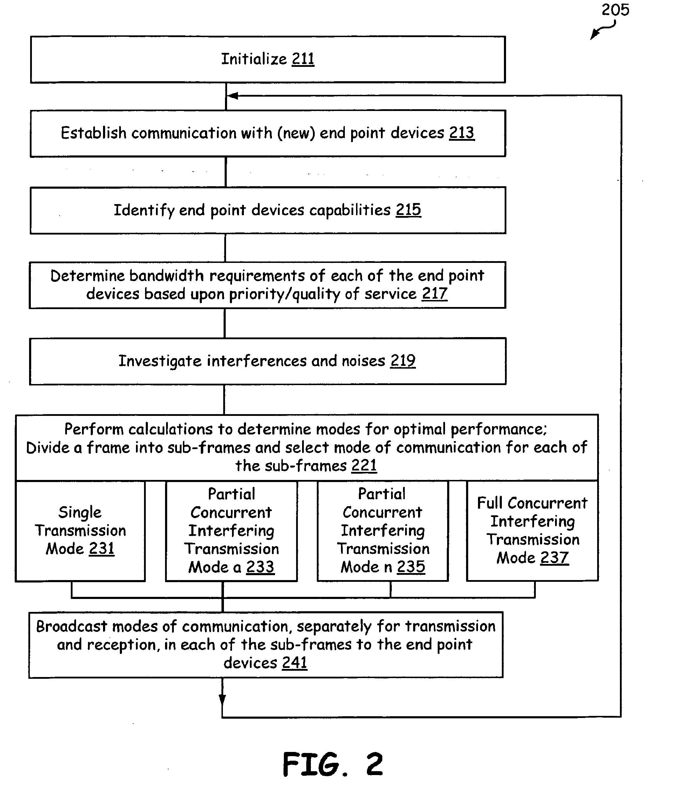

FIG. 2 is a flow diagram illustrating functionality of a wireless access point that adapts frame parameters of concurrent interfering transmissions and receptions, applicable to a portion of a frame, based on varying channel conditions, in accordance with the present invention. In this approach, the wireless access point divides a frame into contention free and contention periods, and further divides each into sub-frames that operate on the basis of one of the modes. The wireless access point adapts the coding aggressiveness by considering the channel conditions and wireless end point device capabilities, and by selecting one of single transmission mode, a plurality of partial concurrent interfering transmission modes and full concurrent interfering transmission mode. The wireless access point broadcasts mode selections that are applicable to each of the sub-frames during a beacon period and the wireless end point devices plan their communication in the frame accordingly.

The functionality of the wireless access point, using this approach, begins at a block 211, when the access point initializes by making initial assessment of cell. The initial assessment includes identifying the number of wireless end point devices that are attempting to access a backbone network. In addition, as a part of initialization, the wireless access point queries each of the plurality of wireless end point devices regarding capabilities, demands of quality of service, anticipated bandwidth usage and idle states. As a part of initialization, the wireless access point also searches for any noises and interferences that may reduce the efficiency of transmission. The capabilities of the plurality of wireless end point devices may include single transmissions and receptions capabilities, concurrent interfering transmissions and receptions capabilities or both. The wireless access point also verifies if the wireless end point devices have multiple radio band transmissions and receptions capabilities.

At a next block 213, the wireless access point establishes communication with wireless end point devices during a beacon period. In a periodic assessment, the access point may attempt to establish communication with new wireless end point devices that entered the cell recently. At a next block 215, the wireless access point identifies device capabilities and limitations of the newly entered wireless end point devices. The capabilities may include single transmissions and receptions capabilities or concurrent interfering transmissions and receptions capabilities. At a next block 217, the wireless access point assesses bandwidth requirements of each of the wireless end point devices based upon priority and quality of service, by querying each of the plurality of wireless end point devices regarding quality of service, anticipated bandwidth usage and idle states. At a next block 219, the wireless access point investigates interferences and noises within the cell.

The wireless access point performs calculations to determine a mode for an optimal performance, at a next block 221. Then, the wireless access point divides a frame into number of sub-frames and selects a mode of communication for each of these sub-frames. The modes are illustrated as event blocks such as single transmission mode 231, partial concurrent interfering transmission mode a 233, partial concurrent interfering mode n 235 and full concurrent interfering transmission mode 237. The partial concurrent interfering transmission modes a and n illustrated may in practice be many more that range from a through n. Once modes for each of the sub-frame are selected, the wireless access point informs this to wireless end point devices by broadcasting it, at a next block 241. The considerations for transmission and receptions, from the point of view of wireless access point, may be different and are also informed to the wireless end point devices.

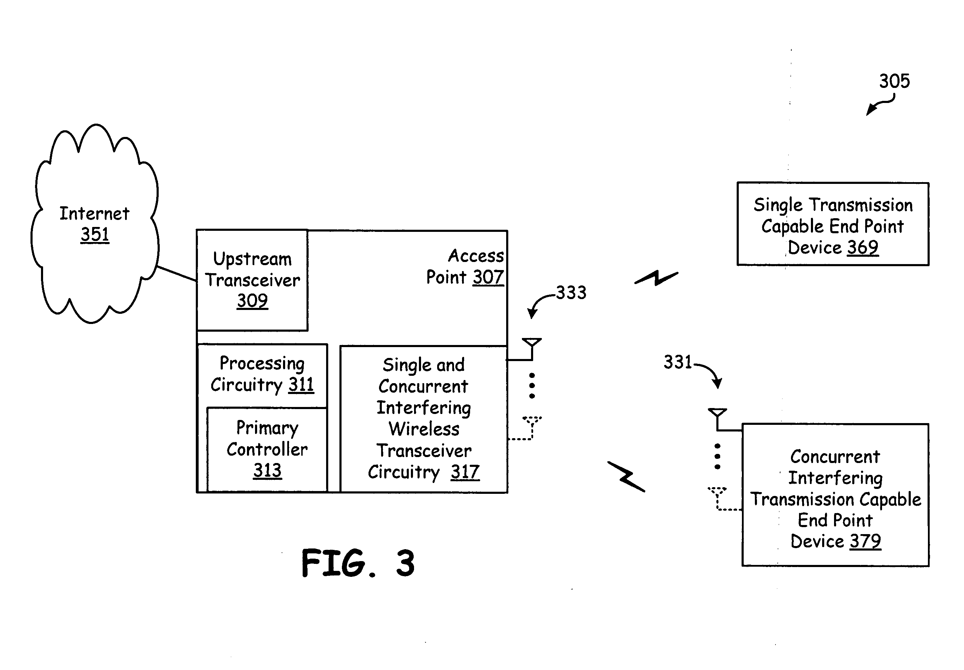

FIG. 3 is a schematic block diagram of a wireless network infrastructure 305 that supports the adaptations of FIGs. 1 and 2, illustrating a wireless access point 307, single transmission capable device 369 and concurrent interfering transmission capable device 379. Though there may be many number of single transmission capable devices and concurrent interfering transmission capable devices with in a cell, such that the number of devices vary with time and create dynamically varying channel conditions, only one of each type are shown. Other factors that influence dynamically changing channel conditions include quality of service to each of the devices 369 and 379, priority services provided such as Voice over Internet Protocol (VoIP), idle states, interferences and noises within the cell. The wireless access point 307, in accordance with the present invention, responds to these dynamically changing channel conditions by adapting concurrent interfering frame parameters. These frame parameters represent factors that include coding aggressiveness, that is, the number concurrent interfering transmission that are resolved during a frame period (or, a portion of frame period), and payload length. During adaptation, overhead associated with the increasing coding aggressiveness and increasing payload length are automatically taken into consideration to optimize the wireless access point 307 efficiency.

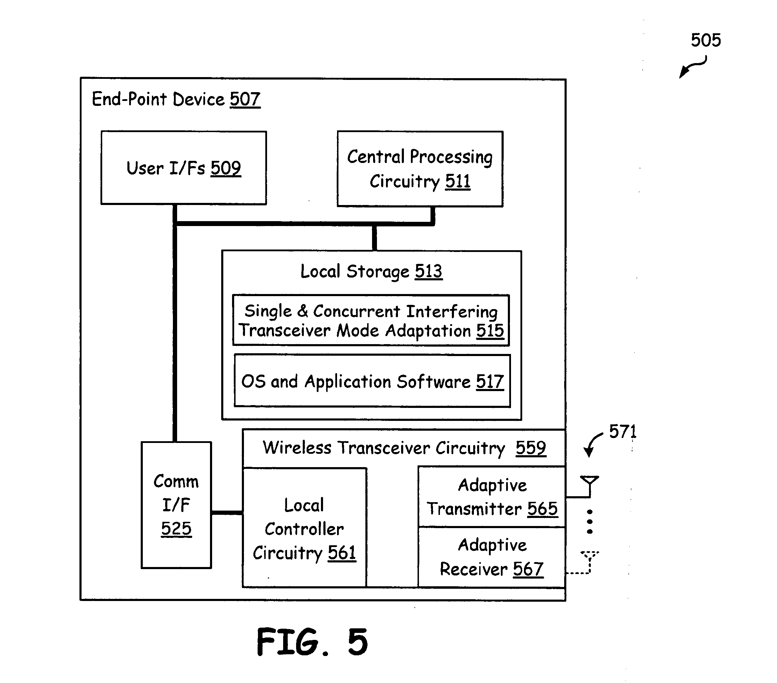

In an entire frame adaptation approach, the wireless access point 307 allocates a portion of contention free period to single transmission capable end point devices such as 369 that are only equipped with single transmission transceiver circuitries (not shown). During this period, neither the wireless access point 307 nor wireless end point devices equipped with concurrent interfering transmission circuitry perform concurrent interfering transmissions or receptions. Similarly, during contention period, the wireless access point 307 provides routing to all of the single transmission capable devices depending on contention from the wireless end point devices and arbitration, during separate potions of the period. The concurrent interfering transmission capable device 379 is equipped with single transceiver circuitry, concurrent interfering transceiver circuitry (described with reference to the FIG. 5). These transceivers are capable of performing both single transmissions and receptions, and concurrent interfering transmissions and receptions. The wireless access point 307 allocates a second portion of contention free period to wireless end point devices that are equipped with both single transceiver circuitries and concurrent interfering transceiver circuitries, so that depending upon channel conditions single or concurrent interfering transmissions and receptions may be performed. In addition, during a contention period, the wireless access point 307 provides routing to the plurality of concurrent interfering transmission capable devices depending on contention from the wireless devices and arbitration, during separate potions of the period. Each of the frame may adapt one of many possible transmission modes, such as single transmission mode, a plurality of partial concurrent interfering transmission modes (say, partial concurrent interfering transmission modes a through n) and full concurrent interfering transmission mode. Similarly, during adaptation payload lengths are controlled.

In an alternative adaptation approach, the wireless access point 307 divides both contention free period and contention period in to a predetermined number of sub-frames and adapts one of the single transmission mode, plurality of partial concurrent interfering transmission modes or full concurrent interfering transmission mode for each sub-frame. The duration of each sub-frame and payload lengths are controlled so as to optimize the wireless access point 307 efficiency, based upon channel conditions.

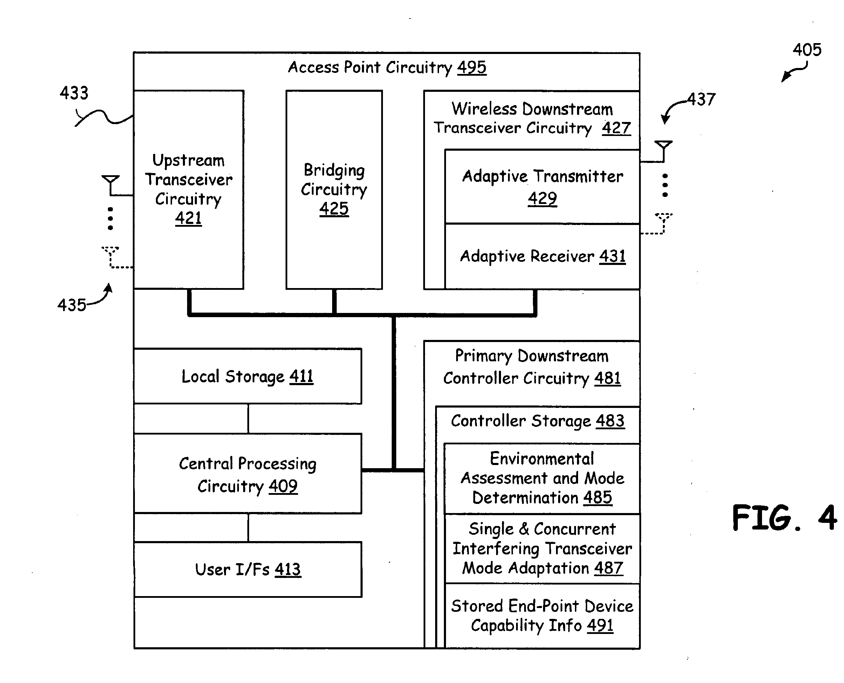

Beacon signals generated by a primary controller 313 control the aspects of transmissions and receptions such as mode of transmission, contention free period accesses and contention period arbitrations. All associated wireless devices listen to beacon signals generated by the wireless access point 307 and plan their communication accordingly. A bridge circuitry (shown in FIG. 4) provides the wireless access point 307 ability to bridge with other wireless access points as well as bridge with Internet (or any other backbone network) 351 via an upstream transceiver 309. The wireless access point 307 and the concurrent interfering transmission capable wireless end point devices such as 379 may have a plurality of antennas such as 331 and a plurality of tuners, thus being capable of communicating in more than one radio channel.

FIG. 4 is a schematic block diagram 405 of a wireless access point 495 built in accordance with the embodiment of FIG. 3. The circuitry 495 may represent any of the wireless access points that route data packets. The wireless access point circuitry 495 generally includes central processing circuitry 409, local storage 411, user interfaces 413, upstream transceiver circuitry 421, bridging circuitry 425, wireless downstream transceiver circuitry 427 and primary downstream controller circuitry 481. These components communicatively coupled to one another via one or more of a system bus, dedicated communication pathways, or other direct or indirect communication pathways. The central processing circuitry 409 may be, in various embodiments, a microprocessor, a digital signal processor, a state machine, an application specific integrated circuit, a field programming gate array, or other processing circuitry. In addition, in various embodiments, the primary downstream controller circuitry 481 may be a controller card or part of a wireless access point circuitry card containing a microcontroller or microprocessor.

Local storage 411 may be random access memory, read-only memory, flash memory, a disk drive, an optical drive, or another type of memory that is operable to store computer instructions and data. The local storage 411 contains software components (not shown) that process received data in cases of both single transmission capable devices and concurrent interfering transmission capable devices. These software components utilize digital signal processing (information processing) techniques to provide concurrent interfering access to a plurality of concurrent interfering transmission capable end point devices, and also resolve plurality of concurrent interfering receptions in partial concurrent transmission modes and full concurrent transmission modes. The software components may include single transmission detection algorithm, single transmission algorithms, which assist in processing the data received from the single transmission capable devices and concurrent interfering transmission detection algorithms and concurrent interfering transmission algorithms which assist in processing the data received from the concurrent interfering transmission capable devices.

The decisions regarding single and concurrent interfering transmissions portions during both contention period and contention free period are transmitted to the single transmission capable devices and concurrent interfering transmission capable devices during a beacon period, by the primary downstream controller circuitry 481. During the beacon period, the primary downstream controller circuitry 481 informs about the duration of frame or each of the portions of frame, mode(s) and payload lengths to the associated devices, in either of an approach of entire frame or an approach of sub-frames. The primary downstream controller circuitry 481 determines the durations of these portions based upon the number of associated wireless end point devices within a cell, their capabilities, anticipated bandwidth usage, QOS (Quality Of Service) demands, and priority of service, idle states, cell overlap interferences, near-far interferences and noises. The beacon signals control the aspects of end point wireless devices that include mode of transmission, contention free period accesses and contention period arbitrations. All associated wireless end point devices listen to beacon signals and plan their communication accordingly. Stored end-point device capability information 491 assist primary downstream controller circuitry 481 in making decisions regarding adaptations to varying channel conditions. In addition, the primary downstream controller circuitry 481 contains controller storage 483. The controller storage 481 contains programming codes such as environmental assessment and mode determination 485 and single and concurrent interfering transceiver mode adaptation 487 that assist primary downstream controller circuitry 481 to determine a current channel condition, during an initial or a periodic assessment, and adapt the wireless downstream transceiver circuitry 427 mode accordingly.

The wireless downstream transceiver circuitry 427 is equipped with an adaptive transmitter 429 and adaptive receiver 431 to handle the physical layer of protocol. The wireless downstream transceiver circuitry 427 is capable of performing both single transmission and receptions, and concurrent interfering transmission and receptions. The wireless downstream transceiver circuitry 427 is communicatively coupled to a plurality of antennas 437 that help communicate in multiple radio channels and a wider bandwidth. In one embodiment, the software information processing components mentioned above with regards to the local storage 411 may exist in storage of wireless downstream transceiver circuitry 427, to facilitate faster processing.

A bridge circuitry 425 allows bridging of the wireless access point 495 with other wireless access points as well as bridge with a backbone network via an upstream transceiver 421. The upstream transceiver circuitry 421 contains wired and wireless packet switched interfaces that provides the wireless access point ability to communicatively couple with a backbone network such as Internet, and is connected to a plurality of antennas 435 as well as a wire 433 that communicatively couples to the backbone network. In other embodiments, the access point circuitry 495 of the present invention may include fewer or more components than are illustrated as well as lesser or further functionality. In other words, the illustrated wireless device is meant to merely offer one example of possible functionality and construction in accordance with the present invention.

FIG. 5 is a schematic block diagram 505 of a wireless end point device 507 built in accordance with the embodiment of FIG. 3. The circuitry 507 may represent any of the wireless end point devices from which packets originate or within which packets terminate and may represent any of the concurrent interfering transmission capable wireless end point devices of FIG. 3. The wireless end point device 507 generally includes central processing circuitry 511, local storage 513, user interfaces 509, wireless transceiver circuitry 559 and communication interface 525. These components communicatively coupled to one another via one or more of a system bus, dedicated communication pathways, or other direct or indirect communication pathways.

The central processing circuitry 511 may be, in various embodiments, a microprocessor, a digital signal processor, a state machine, an application specific integrated circuit, a field programming gate array, or other processing circuitry. In addition, in various embodiments, the wireless transceiver circuitry 559 may consist of a local controller circuitry 561 containing a microcontroller or microprocessor. Local storage 513 may be random access memory, read-only memory, flash memory, a disk drive, an optical drive, or another type of memory that is operable to store computer instructions and data. The local storage 513 contains device operating system and application software 517 and single and concurrent interfering transceiver mode adaptation code 515. The communication interface 525 allows the wireless end point device 507 to interface with the wireless transceiver circuitry 559.

The wireless transceiver circuitry 559 contains the local controller circuitry 561. The local controller circuitry 561 manages control functionality of wireless transceiver circuitry 559, by planning communication in one of single transmission mode, a plurality of partial-concurrent interfering transmission modes and full concurrent interfering transmission mode during any given frame or a portion of frame. The local controller circuitry 561 listens to the control signals during beacon period and adheres to the adapted frame characteristics. The control functionality of the wireless transceiver circuitry 559 include generating radio capability information and transmitting it to a wireless access point during a beacon period as well as receiving the control signals from an associated access point, interpreting it and plan communication accordingly. The wireless transceiver circuitry 559 is also equipped with an adaptive transmitter 565 and adaptive receiver 567. The wireless transceiver circuitry 559 is capable of performing both single transmission and receptions, and concurrent interfering transmission and receptions.

FIG. 6 is an exemplary timing diagram 605 illustrating single, partial concurrent interfering and full concurrent interfering transmission modes, during contention free and contention periods, in the embodiment of FIG. 1. As the illustration shows, a frame contains a beacon period, contention free transmission period and contention period. In an entire frame adaptation approach (605, and FIGs. 7 and 8), a frame is adapted by varying duration of single transmission mode (refer to Frame A), one of partial concurrent interfering transmission modes a through n (refer to Frame B), and full concurrent interfering transmission mode (refer to Frame C). This is applicable to both contention free period and contention period, in case of single transmission mode and partial concurrent transmission modes. As described with reference to the FIGs. 7 and 8, the payload length is also varied in accordance with channel conditions.

The channel conditions are determined on the basis of number of associated wireless end point devices within the cell, their capabilities, anticipated bandwidth usage, QOS (Quality Of Service) demands, priority of service and idle states, cell overlap interferences, near-far interferences and noises. In single transmission mode, contention free period duration 611 and contention period duration 613 are varied in accordance with channel conditions, to optimize the performance of the wireless access point. Similarly, in partial concurrent interfering transmission mode n, the contention free period duration 621 and contention period duration 623 are varied in accordance with channel conditions. The partial concurrent interfering transmission mode allows a limited number of wireless end point devices to transmit or receive data concurrently, and this occurs on the basis of channel being free for transmission or reception in contention free period and on the basis of contention and arbitration during contention period. In case of a full concurrent interfering transmission mode, the transmission period duration 631 is varied in accordance with channel conditions. In full concurrent interfering transmission mode, no restrictions are enforced on wireless end point devices to transmit and receive.

The beacon signals that determine the accesses to wireless access point in various modes, during both contention free period and contention period, and are transmitted to the single transmissions capable devices and concurrent interfering transmissions capable devices during the beacon period. The access modes include both single transmissions mode, partial concurrent interfering transmission modes a through n, and full concurrent interfering transmissions mode. The decision to provide access in any mode and the duration of access depends on the wireless end point device capability and the wireless access point performance considerations. The beacon signals control the aspects of end point devices that include mode of transmission, contention free period accesses and contention period arbitrations. All associated wireless end point devices respond to the beacon signals and plan their communication accordingly.

FIG. 7 is a timing diagram 705 illustrating receptions during a contention free period of a partial concurrent interfering transmission mode of FIG. 6. The illustration shows Frame B of FIG. 6, wherein one of the partial concurrent interfering modes (say, mode n) is adapted during the contention free period. The illustration also shows two wireless end point devices, wireless device X and wireless device Y, transmitting data concurrently to the wireless access point.

As illustrated, a beacon period precedes the contention free period. The beacon signals that determine the transmission to and receptions from the wireless access point in various modes during contention free period are transmitted to the single transmission capable devices and concurrent interfering transmission capable devices during the beacon period. The decision regarding partial concurrent interfering transmission mode n is transmitted during this beacon period, and depends primarily on the wireless device capability and the channel conditions. The beacon signals control the aspects of end point wireless devices that include mode of transmission, contention free period accesses and contention period arbitrations. All associated wireless end point devices respond to the beacon signals and plan their communication accordingly. Following beacon period, the contention free period begins by providing a portion of the Frame B for few of the concurrent interfering transmission capable devices.

As the illustration shows, in the partial concurrent interfering transmission mode n, the concurrent interfering transmission capable devices X and Y (such as the 379 of FIG. 3), sense channel being idle for a SIFS duration and transmit data to the access point, concurrently. The data transmission from the concurrent interfering transmission capable wireless devices is based upon acknowledgement after transfer of data, as illustrated. Similar considerations apply for transmission of data from the access point to the concurrent interfering transmission capable wireless devices.

FIG. 8 is a timing diagram 805 illustrating receptions during a contention period of a partial concurrent interfering transmission mode of FIG. 6. The illustration shows Frame B of FIG. 6, wherein one of the partial concurrent interfering modes (say, mode n) is adapted during the contention period. The illustration also shows two wireless end point devices, wireless device X and wireless device Z, transmitting data concurrently to the wireless access point. The decisions regarding partial concurrent interfering transmission mode n and contention period are transmitted during the beacon period, and depends primarily on the wireless device capability and the channel conditions.

Following beacon period and the contention free period, contention period begins by providing a portion of the Frame B for few of the concurrent interfering transmission capable devices, on the basis of contention. During contention period, the concurrent interfering transmission capable end point wireless devices (such as the wireless device X and Y) sense Distributed coordination function Inter Frame Space (DIFS) and transmits RTS signal. After a SIFS, the wireless access point responds by sending a CTS signal. Again, after a SIFS, the concurrent interfering transmission capable end point wireless devices send data and receive ACK in response.

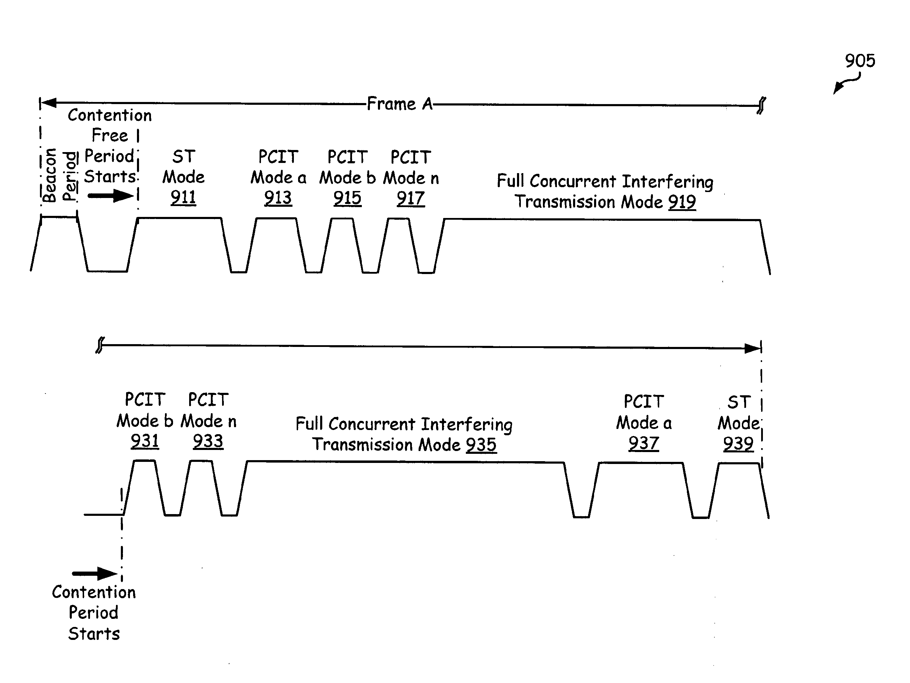

FIG. 9 is an exemplary timing diagram 905 illustrating single, partial concurrent interfering and full concurrent interfering transmission modes, using a sub-frame approach, in the embodiment of FIG. 2. The illustration shows a frame (Frame A) containing a beacon period, contention free transmission period and contention period. In this approach of adaptation, the frame A is adapted by dividing it into sub-frames and varying duration of the sub-frames. This is applicable to both contention free period and-contention period, in case of single transmission mode and partial concurrent transmission modes. The payload length is also varied in accordance with channel conditions. The illustration shows contention free period containing sub-frames such as ST (Single Transmission) mode 911, PCIT (Partial Concurrent Interfering Transmission) mode a 913, PCIT mode b 915, PCIT mode n 917 and full concurrent interfering transmission mode 919. Similarly, contention period contains sub-frames such as PCIT mode b 931, PCIT mode n 933, full concurrent interfering transmission mode 935, PCIT mode a 937 and ST mode 939.

The modes, mode durations and payload lengths are varied in accordance with channel conditions. The channel conditions are determined on the basis of number of associated wireless end point devices within the cell, their capabilities, anticipated bandwidth usage, QOS (Quality Of Service) demands, priority of service and idle states, cell overlap interferences, near-far interferences and noises.

The wireless access point determines the transmission modes applicable for each of the sub-frames, during both contention free period and contention period, and transmits it to the single transmissions capable devices and concurrent interfering transmissions capable devices during the beacon period. The access modes include both single transmissions mode, partial concurrent interfering transmission modes a through n, and full concurrent interfering transmissions mode. The selection of mode and the duration of access in each sub-frame depend on the wireless end point device capability and the wireless access point performance considerations.

The terms "circuit" and "circuitry" as used herein may refer to an independent circuit or to a portion of a multifunctional circuit that performs multiple underlying functions. For example, depending on the embodiment, processing circuitry may be implemented as a single chip processor or as a plurality of processing chips. Likewise, a first circuit and a second circuit may be combined in one embodiment into a single circuit or, in another embodiment, operate independently perhaps in separate chips. The term "chip", as used herein, refers to an integrated circuit. Circuits and circuitry may comprise general or specific purpose hardware, or may comprise such hardware and associated software such as firmware or object code.

As one of ordinary skill in the art will appreciate, the terms "operably coupled" and "communicatively coupled," as may be used herein, include direct coupling and indirect coupling via another component, element, circuit, or module where, for indirect coupling, the intervening component, element, circuit, or module does not modify the information of a signal but may adjust its current level, voltage level, and/or power level. As one of ordinary skill in the art will also appreciate, inferred coupling (i.e., where one element is coupled to another element by inference) includes direct and indirect coupling between two elements in the same manner as "operably coupled" and "communicatively coupled."

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. An access point circuitry that supports a plurality of end point devices, the access point circuitry comprising:
receiver circuitry that receives a concurrent interfering transmission from the plurality of end point devices, in a current frame;
processing circuitry, communicatively coupled to the receiver circuitry, that detects the concurrent interfering transmission;
transmitter circuitry communicatively coupled to the processing circuitry;
the processing circuitry, based on a change in a channel condition, generates an instruction to change at least one frame parameter for the a next frame;
the processing circuitry delivers the instruction to adapt to the change in the at least one frame parameter during the next frame, to at least one of the plurality of end point devices via the transmitter circuitry; and
the processing circuitry detects received concurrent interfering transmission from the plurality of end point devices, in the next frame.

2. The access point circuitry of claim 1, wherein the processing circuitry delivers the instruction to adapt to the change in the at least one frame parameter during the next frame at the beginning of the next frame.

3. The access point circuitry of claim 2, wherein the next frame comprising one or more sub-frames.

4. The access point circuitry of claim 2, wherein the change in the at least one frame parameter is applicable to one of the sub-frames.

5. The access point circuitry of claim 4, wherein the frame parameter comprising duration of the one of the sub-frames.

6. An end point device circuitry that supports concurrent interfering receptions, the end point device circuitry comprising:
receiver circuitry that receives a concurrent interfering transmission;
processing circuitry, communicatively coupled to the receiver circuitry, that detects the concurrent interfering transmission;
the processing circuitry receives an instruction to adapt at least one frame parameter for a next frame;
the processing circuitry responds to the instruction by adapting at least one frame parameter for the next frame; and
the processing circuitry detects data from the received concurrent interfering transmission during the next frame.

7. The end point device circuitry of claim 6, wherein the frame parameter comprising duration of the next frame.

8. The end point device circuitry of claim 6, wherein the frame parameter comprising a concurrent interfering transmission mode.

9. A method performed by an access point that communicates a plurality of packets with a plurality of end point devices, in a wireless network infrastructure, the method comprising:
initializing;
establishing communication with each of the plurality of end point devices;
identifying capabilities of each of the plurality of end point devices;
determining channel conditions; and
adapting at least one frame parameter for a next frame.

10. The method of claim 9, wherein the access point informs adaptation of at least one frame parameter for a next frame during a beacon period.
